# EUROPEAN PATENT APPLICATION

(11) **EP 2 709 395 A1**
(43) Date of publication of application: **19.03.2014**
(21) Application number: 12804750.3
(22) Date of filing: 26.06.2012
(51) Int. Cl.: H04W 16/14

(54) **METHOD FOR DYNAMICALLY ADJUSTING SUBFRAME IN WIRELESS COMMUNICATION SYSTEM, BASE STATION, AND SYSTEM**

(30) Priority: 29.06.2011 CN 201110179194
(71) Applicant: Huawei Technologies Co., Ltd, Shenzhen, Guangdong 518129 (CN)
(72) Inventor: TANG, Binsong, Shenzhen Guangdong 518129 (CN); DENG, Tianle, Shenzhen Guangdong 518129 (CN); LUO, Haiyan, Shenzhen Guangdong 518129 (CN)
(74) Representative: Goddar, Heinz J.
(86) International application number: PCT/CN2012/077490
(87) International publication number: WO 2013/000388

(57) **Abstract**

Embodiments of the present invention disclose a method for dynamically adjusting a subframe in a wireless communications system, including: generating, by a first base station, an almost blank subframe configuration request according to interference in the first base station and/or a load of the first base station, where the almost blank subframe configuration request carries quantity information of almost blank subframes; sending the almost blank subframe configuration request to a second base station so that the second base station adjusts the number of the almost blank subframes of the second base station according to the almost blank subframe configuration request. The embodiments of the present invention further disclose a base station and a wireless communications system. By using the present invention, a reliability problem brought by interference of transmission between channels in the prior art, meanwhile average spectrum efficiency of the system is improved, and average capacity and average throughput of the system are improved.

## Description

### TECHNICAL FIELD

The present invention relates to the communications field, and in particular to a technical solution for dynamically adjusting a subframe in a wireless communications system.

### BACKGROUND

A wireless communications system may provide wireless services such as voice and data. Generally, a wireless communications system is a multiple access wireless system. In a wireless communications system, a base station transmits data and information to a user equipment (UE, User Equipment) in a downlink and receives data and information about the user equipment in an uplink. Similarly, the user equipment transmits data and information for the base station in the uplink and receives the data and information transmitted by the base station in the downlink.

To meet or improve a performance requirement of the wireless communications system, for example, a performance requirement for improving an advanced long term evolution (LTE-A, Advanced long term evolution), base stations with different types or different standards are deployed in a network to improve network coverage and performance. Such network architecture is called a heterogeneous network (Heterogeneous network).

On a heterogeneous network, for example, on a heterogeneous network on which a base station with high transmit power (such as a macro base station, Macro base station) and a base station with low transmit power (LPN, Low power node) that uses a same standard as the base station with the high transmit power but a different type are deployed, complete or partial spectrum multiplexing is performed for configurable uplink and/or downlink spectrum resources of the LPN and configurable uplink and/or downlink spectrum resources of the Macro base station so as to improve spectrum utilization of the system. Then, because the LPN is configured with spectrum resources that are the same as or partially the same as those of the Macro base station, co-channel (or intra-frequency) interference occurs in transmission between downlink (or uplink) channels of the LPN (or a UE served by the LPN) and the Macro base station (or a UE served by the Macro base station), and the interference affects reliability of transmission in the downlink channels of the LPN and the Macro base station and reliability of detection in the uplink channels (channels including a control channel and a data channel) of the LPN and the Macro base station.

Currently, the LTE-A standard uses a method of time division multiplexing (TDM, Time Division Multiplexing) inter-cell interference coordination (ICIC, Inter Cell Interference Coordination) to handle inter-cell interference in a heterogeneous network scenario. An interference base station sets some subframes to the ones with low transmit power for service transmission or the ones without service transmission (that is, service transmission power is zero). The subframes may be called almost blank subframes (ABS, Almost Blank Subframe). An interfered base station schedules a UE strongly interfered by the interference base station to a subframe corresponding to the ABS configured by the interference base station, thereby ensuring transmission performance of the UE interfered by the interference base station.

However, when a method of ABS time division multiplexing inter cell interference coordination is used to handle the inter-cell interference in the heterogeneous network scenario, both a complete blank subframe and a subframe with low transmit power may cause a certain degree of spectrum resource waste. How to resolve problems brought by interference and meanwhile improve average spectrum efficiency of a system is a hot topic being studied by peoples.

### SUMMARY

One aspect of the present invention provides a method for dynamically adjusting a subframe in a wireless communications system, including: generating, by a first base station, an almost blank subframe configuration request according to interference in the first base station and/or a load of the first base station, where the almost blank subframe configuration request carries quantity information of almost blank subframes; sending, by the first base station, the almost blank subframe configuration request to a second base station so that the second base station adjusts the number of almost blank subframes of the second base station according to the almost blank subframe configuration request.

Another aspect of the present invention discloses a method for dynamically adjusting a subframe in a wireless communications system, including: receiving, by a second base station, an almost blank subframe configuration request sent by a first base station, where the almost blank subframe configuration request is almost blank subframe configuration request generated by the first base station according to interference in the first base station and/or a load of the first base station; and adjusting, by the second base station, the number of almost blank subframes of the second base station according to the almost blank subframe configuration request.

Another aspect of the present invention further discloses a base station, including: a subframe configuration request receiving unit, configured to receive an almost blank subframe configuration request sent by a first base station, where the almost blank subframe configuration request is almost blank subframe configuration request generated by the first base station according to interference in the first base station and/or a load of the first base station; and a subframe adjusting unit, configured to adjust the number of almost blank subframes of the second base station according to the almost blank subframe configuration request.

Still another aspect of the present invention further discloses a base station, including: a subframe configuration request generating unit, configured to generate an almost blank subframe configuration request according to interference in the base station and/or a load of the base station, where the almost blank subframe configuration request carries quantity information of almost blank subframes; and a subframe configuration request sending unit, configured to send the almost blank subframe configuration request generated by the subframe configuration request generating unit to the second base station so that the second base station adjusts the number of almost blank subframes of the second base station according to the almost blank subframe configuration request.

Still another aspect of the present invention further discloses a wireless communications system, including the base station.

In the foregoing technical solutions, an almost blank subframe configuration request sent by a base station is received, where the almost blank subframe configuration request is almost blank subframe configuration request generated by the base station according to a running condition of the base station; and the number of almost blank subframes is adjusted according to the almost blank subframe configuration request. This implements a mechanism for automatically and dynamically adjusting use of an ABS, solves a reliability problem brought by interference of transmission between channels in the prior art, and meanwhile improves average spectrum efficiency of a system. In this way, the own ABS is set according to current own ABS configuration and service, thereby efficiently improving average capacity and average throughput of the system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for dynamically adjusting a subframe in a wireless communications system according to a first embodiment of the present invention;
FIG. 2 is a flowchart of a method for dynamically adjusting a subframe in a wireless communications system according to a second embodiment of the present invention;
FIG. 3 is a flowchart of a method for dynamically adjusting a subframe in a wireless communications system according to a third embodiment of the present invention;
FIG. 4 is a first schematic diagram showing that a Pico base station requests for an ABS from a Macro base station according to interference in the Pico base station according to an embodiment of the present invention;
FIG. 5 is a second schematic diagram showing that a Pico base station requests for an ABS from a Macro base station according to interference in the Pico base station according to an embodiment of the present invention;
FIG. 6 is a third schematic diagram showing that a Pico base station requests for an ABS from a Macro base station according to interference in the Pico base station according to an embodiment of the present invention;
FIG. 7 is a fourth schematic diagram showing that a Pico base station requests for an ABS from a Macro base station according to interference in the Pico base station according to an embodiment of the present invention;
FIG. 8 is a flowchart of a method of Embodiment 4 for dynamically adjusting a subframe in a wireless communications system according to the present invention;
FIG. 9 is a schematic diagram showing signaling transfer according to an embodiment of the present invention;
FIG. 10 is a schematic structural diagram of a wireless communications system according to an embodiment of the present invention;
FIG. 11 is a schematic structural diagram of a second base station according to an embodiment of the present invention;
FIG. 12 is a schematic structural diagram of a first base station according to a first embodiment of the present invention;
FIG. 13 is a schematic structural diagram of a first base station according to a second embodiment of the present invention;
FIG. 14 is a schematic structural diagram of a first base station according to a third embodiment of the present invention; and
FIG. 15 is a schematic structural diagram of a first base station according to a fourth embodiment of the present invention;

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

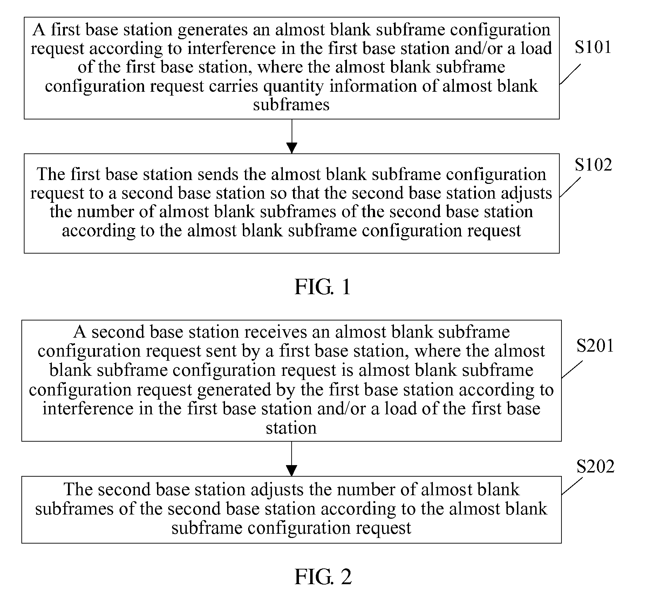

FIG. 1 is a flowchart of a method for dynamically adjusting a subframe in a wireless communications system according to a first embodiment of the present invention. The method includes the following content:
S101. A first base station generates an almost blank subframe configuration request according to interference in the first base station and/or a load of the first base station, where the almost blank subframe configuration request carries quantity information of almost blank subframes.
S102. The first base station sends the almost blank subframe configuration request to a second base station so that the second base station adjusts the number of almost blank subframes of the second base station according to the almost blank subframe configuration request.

Accordingly, FIG. 2 is a flowchart of a method for dynamically adjusting a subframe in a wireless communications system according to a second embodiment of the present invention. The method includes the following content:
S201. A second base station receives an almost blank subframe configuration request sent by a first base station, where the almost blank subframe configuration request is almost blank subframe configuration request generated by the first base station according to interference in the first base station and/or a load of the first base station.
S202. The second base station adjusts the number of almost blank subframes of the second base station according to the almost blank subframe configuration request.

Specifically, the second base station adjusts the number of subframes according to the subframe configuration request, such as increasing, decreasing, or retaining the number of subframes. The subframes are subframes that transmit a service with low transmission power or do not transmit a service. That is, the subframes are ABSs.

According to the embodiment for dynamically adjusting a subframe in a wireless communications system in the present invention, on a heterogeneous network or a non-heterogeneous network, when a TDM ICIC method is used to handle inter-cell interference in a heterogeneous network scenario, automatic and dynamic adjustment of the usage of the ABS according to a running condition of the base station is implemented, thereby solving a reliability problem brought by interference of transmission between channels in the prior art and meanwhile improving average spectrum efficiency of the system. When the base station sets the ABS of the base station according to the current ABS configuration and service of the base station, an average capacity and an average throughput of the system may be efficiently improved.

It should be noted that generating, by the first base station, a subframe configuration request according to the running condition of the first base station in step S101 specifically includes: generating, by the base station, a subframe configuration request according to the interference in the first base station and/or the load of the first base station and according to a preset communications protocol, where the communications protocol may be set after being negotiated between two communications parties in advance. For example, a new communications protocol is negotiated and defined in advance or a communications protocol is extended. The subframe configuration request may carry quantity information of the almost blank subframes and specifically may be that the number of the subframes requires to be increased, decreased, or remained.

It also should be noted that after step S202, the method may include: returning, by the second base station, subframe configuration request response information to the first base station so as to notify the first base station of ongoing subframe configuration.

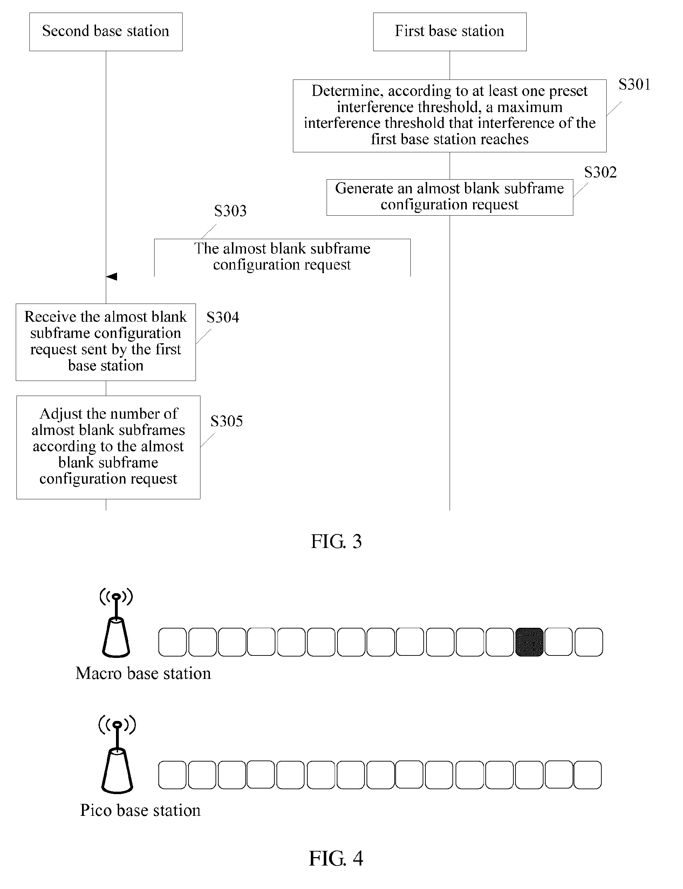

Further, FIG. 3 is a flowchart of a method for dynamically adjusting a subframe in a wireless communications system according to a third embodiment of the present invention. The method includes the following content:
S301. A first base station determines, according to at least one preset interference threshold, a maximum interference threshold that interference in the first base station reaches, where each interference threshold corresponds to quantity information of almost blank subframes.

Specifically, that the first base station is a pico base station (Pico base station) and a second base station is a macro base station (Macro base station) is used as an example for description. When service traffic of a UE under control of the Pico base station (Pico UE for short) continuously increases, a probability that the Pico base station serves as an interfered base station continuously increases. The Pico base station determines, according to the at least one preset interference threshold, the maximum interference threshold that the interference in the Pico base station reaches. That is, for example, when the interference in the Pico base station increases and exceeds a threshold, the Pico base station determines that the Macro base station needs to add an ABS so as to provide the ABS for the Pico base station; or when the interference in the Pico base station decreases and is lower than a threshold, the Pico base station determines that the Macro base station needs to decrease the number of the ABSs so as to improve average spectrum efficiency.
S302. The first base station generates the almost blank subframe configuration request, where the almost blank subframe configuration request carries the quantity information of the almost blank subframes corresponding to the maximum interference threshold.

Specifically, the Pico base station may generate the almost blank subframe configuration request, such as an ABS configuration mode request (such as ABS pattern change request), according to a preset communications protocol. The almost blank subframe configuration request carries the quantity information of the almost blank subframes corresponding to the determined maximum interference threshold, for example, carries an absolute value of the ABSs, such as 3 or 4; or carries increment information or difference information of the ABSs, such as +2 indicating that two ABSs are added and -2 indicating that two ABSs are removed.
S303. The first base station sends the almost blank subframe configuration request.
S304. The second base station receives the almost blank subframe configuration request sent by the first base station.
S305. The second base station adjusts the number of the almost blank subframes according to the almost blank subframe configuration request.

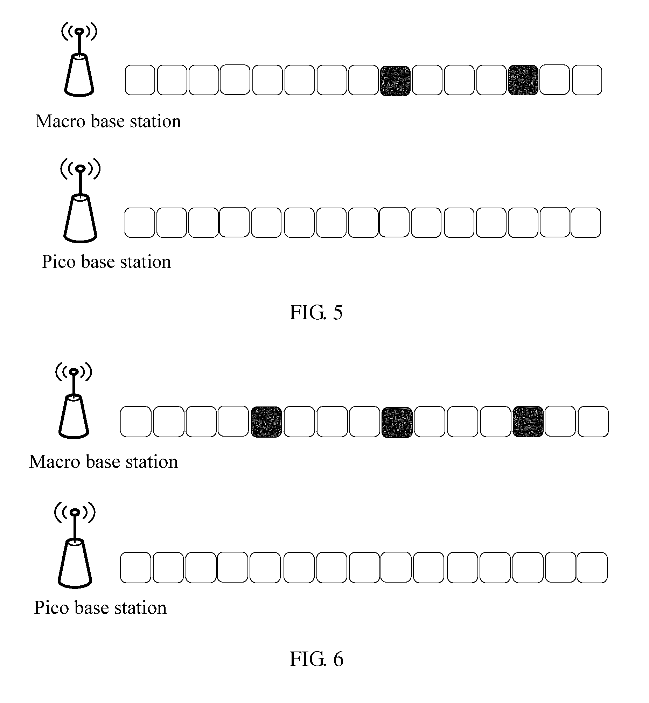

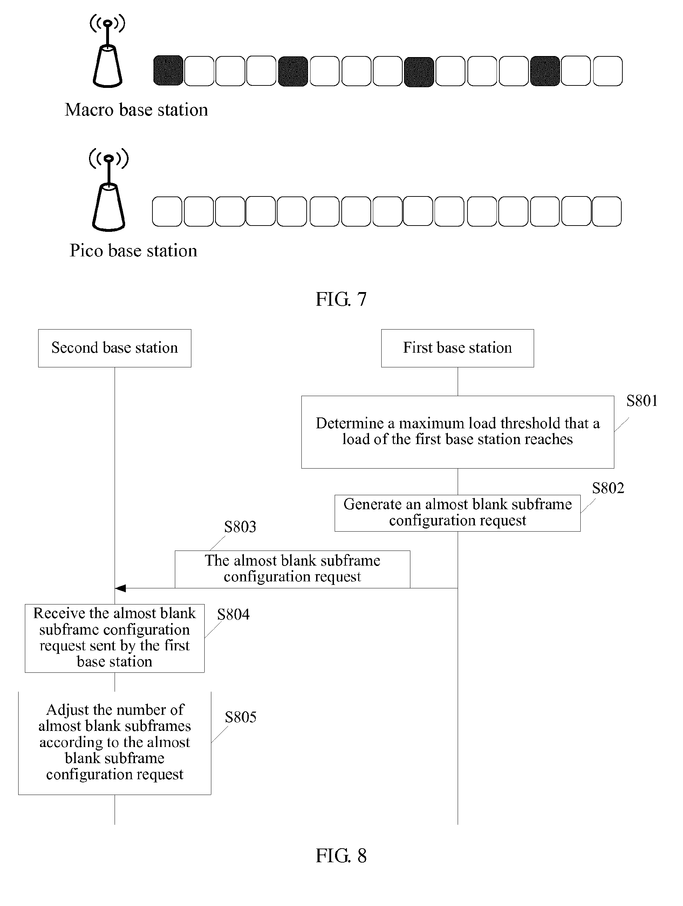

Specifically, after receiving the almost blank subframe configuration request sent by the Pico base station, the Macro base station adjusts the number of the almost blank subframes according to the almost blank subframe configuration request. For example, the Pico base station determines that an ABS needs to be added and then the Macro base station adds the ABS so as to provide the ABS for the Pico base station. FIG. 4 to FIG. 7 are schematic diagrams showing that the Pico base station requests for an ABS from the Macro base station according to interference in the Pico base station. In FIG. 4 to FIG. 7, black blocks indicate ABSs and white blocks indicate other subframes for data or signaling transmission. In FIG. 4, the Pico base station determines that one ABS needs to be added and then the Macro base station adds one ABS so as to provide the ABS for the Pico base station; in FIG. 5, the Pico base station determines that two ABSs need to be added and then the Macro base station adds the two ABSs so as to provide two more ABSs for the Pico base station; in FIG. 6, the Pico base station determines that three ABSs need to be added and then the Macro base station adds the three ABSs so as to provide three more ABSs for the Pico base station; and in FIG. 7, the Pico base station determines that four ABSs need to be added and then the Macro base station adds four ABSs so as to provide the four more ABSs for the Pico base station. On the contrary, if the Pico base station determines that the number of ABSs needs to be decreased, the Macro base station decreases the number of the ABSs so as to save spectrum resources, thereby improving average spectrum efficiency of the system.

It should be noted that in this embodiment of the present invention, a position of an ABS in a corresponding subframe may be set randomly or may also be set according to the almost blank subframe configuration request. Specifically, the almost blank subframe configuration request further carries position information of the almost blank subframes corresponding to the determined maximum interference threshold. For example, the almost blank subframe configuration request generated by the first base station includes an ABS sequence, where the ABS sequence may not only instruct the second base station to set the number of the ABSs in the corresponding subframes but also set positions of the ABSs in the corresponding subframes. When the ABS sequence is 0001000100, it is instructed that No. 4 and No. 8 subframes are ABSs; or when the ABS sequence is 1100110000, No. 1, 2, 5, and 6 subframes are ABSs. Certainly, a person of ordinary skill in the art may also use 0 in the ABS sequence to indicate an ABS and use 1 to indicate a non-ABS.

It should be noted that in this embodiment, the interference in the first base station includes any one or any combination of the following: a signal to interference plus noise ratio (SINR, Signal to Interference plus Noise Ratio) of the first base station, a carrier to interference plus noise ratio (CINR, Carrier to Interference plus Noise Ratio) of the first base station, a carrier/interference ratio (Carrier/Interference, C/I) of the first base station, reference signal reception power (RSRP, Reference signal reception power) reported by a user equipment; and reference signal reception quality (RSRQ, Reference signal reception quality) reported by the user equipment.

For example, when the SINR is used as the interference in the Pico base station, the interfered Pico base station determines, according to at least one preset SINR threshold, a maximum SINR threshold that the SINR of the Pico base station reaches, and generates the almost blank subframe configuration request according to the preset communications protocol.

For another example, when the RSRP reported by the UE is used as the interference in the Pico base station, a UE of the interfered Pico base station reports measured RSRP of a neighboring cell and the Pico base station determines, according to at least one preset RSRP threshold, a maximum RSRP threshold that the RSRP reaches, that is equivalent to determining a degree of the interference in the Pico base station, and generates the almost blank subframe configuration request according to the preset communications protocol.

It should be noted that when the CINR, the C/I, or the RSRQ reported by the UE is used as the interference in the Pico base station, the description is similar as the foregoing description and no further details are provided herein.

Further, FIG. 8 is a flowchart of a method for dynamically adjusting a subframe in a wireless communications system according to a fourth embodiment of the present invention. The method includes the following content:
S801. A first base station determines a maximum load threshold that a load of the first base station reaches, where each load threshold corresponds to quantity information of almost blank subframes.

Specifically, that the first base station is a Pico base station and a second base station is a Macro base station is used as an example for description. When service traffic of a Pico UE continuously increases, the load of the Pico base station continuously increases. The Pico base station determines, according to at least one preset load threshold, a maximum load threshold that the load of the Pico base station reaches. That is, for example, when the load of the Pico base station increases and exceeds a threshold, the Pico base station determines that the Macro base station needs to increase the number of ABSs so as to provide the ABS for the Pico base station; or when the load of the Pico base station decreases and is lower than a threshold, the Pico base station determines that the Macro base station needs to decrease the number of the ABSs so as to improve average spectrum efficiency.
S802. The first base station generates the almost blank subframe configuration request, where the almost blank subframe configuration request carries the quantity information of the almost blank subframes corresponding to the maximum load threshold.

Specifically, the Pico base station may generate the almost blank subframe configuration request, such as an ABS configuration mode request (such as an ABS pattern change request), according to a preset communications protocol. The almost blank subframe configuration request carries the quantity information of the almost blank subframes corresponding to the determined maximum load threshold, for example, carries an absolute value of the ABS quantity, such as 3 or 4; or carries increment information or difference information of the ABSs, such as +2 indicating that two ABSs are added and -2 indicating that two ABSs are removed.
S803. The first base station sends the almost blank subframe configuration request.
S804. The second base station receives the almost blank subframe configuration request sent by the first base station.
S805. The second base station adjusts the number of the almost blank subframes according to the almost blank subframe configuration request.

It should be noted that in this embodiment of the present invention, a position of an ABS in a corresponding subframe may be set randomly or may also be set according to the almost blank subframe configuration request. Specifically, the almost blank subframe configuration request further carries position information of the almost blank subframes corresponding to the determined maximum load threshold. For example, the almost blank subframe configuration request generated by the first base station includes an ABS sequence, where the ABS sequence may not only instruct the second base station to set the number of the ABSs in the corresponding subframes but also set positions of the ABSs in the corresponding subframes. When the ABS sequence is 0001000100, it is instructed that No. 4 and No. 8 subframes are ABSs; or when the ABS sequence is 1100110000, No. 1, 2, 5, and 6 subframes are ABSs. Certainly, a person of ordinary skill in the art may also use 0 in the ABS sequence to indicate an ABS and use 1 to indicate a non-ABS.

It should be noted that the load includes throughput (throughput, that is, the number of bits sent to all UEs within a unit time) or an occupancy rate of a physical resource block (PRB usage).

For example, when the PRB usage is used as the load of the Pico base station, that is, in a scenario where the PRB usage is used, the Pico base station determines, according to at least one preset RPB usage threshold, a maximum PRB usage threshold that the PRB usage of the Pico base station reaches, and generates the almost blank subframe configuration request according to the preset communications protocol.

For another example, when throughput of the Pico base station is used as the load of the Pico base station, the Pico base station determines, according to at least one preset throughput threshold, a maximum throughput threshold that the throughput reaches, and generates the almost blank subframe configuration request according to the preset communications protocol. For details, see the following table.

| Sequence Number | Throughput | ABS Quantity |
|---|---|---|
| 1 | 0-5 Mbps | 1 ABS |
| 2 | 5-10 Mbps | 2 ABSs |
| 3 | 10-20 Mbps | 3 ABSs |
| 4 | 20-50 Mbps | 4 ABSs |
| 5 | 50-100 Mbps | 5 ABSs |

The Pico base station presets five throughput thresholds: 0 Mbps, 5 Mbps, 10 Mbps, 20 Mbps, and 50 Mbps. Each threshold may be set with corresponding quantity information of the almost blank subframes: 1 ABS, 2 ABSs, 3 ABSs, 4 ABSs, and 5 ABSs. Then, for example, when the Pico base station detects that a current throughput is 12 Mbps and the Pico base station determines that the maximum throughput threshold that the throughput reaches is 10 Mbps, the Pico base station generates the almost blank subframe configuration request according to the preset communications protocol, where the almost blank subframe configuration request carries information requiring three ABSs; for another example, when the Pico base station detects that the current throughput is 23 Mbps subsequently and the Pico base station determines that the maximum throughput threshold that the throughput reaches is 20 Mbps, the Pico base station generates the almost blank subframe configuration request according to the preset communications protocol, where the subframe configuration request carries information requiring four ABSs, that is information that asks one ABS to be added compared with a previous setting.

It should be noted that the quantity information of the ABSs may be configured by an operations support system (OSS) or may also be set by an evolved NodeB eNB manufacturer. The present invention is not limited to a parameter setting limited in the foregoing table and a person skilled in the art may flexibly set the parameters according to actual conditions.

Further, the first base station in this embodiment of the present invention (such as a Pico base station) may generates the almost blank subframe configuration request according to interference in the first base station and a load of the first base station and according to the preset communications protocol, where the almost blank subframe configuration request carries quantity information of the almost blank subframes.

Specifically, this embodiment of the present invention may combine the embodiments corresponding to FIG. 3 and FIG. 8. That is, the Pico base station may combine a load factor and an interference factor so as to set the number of the needed ABSs. For example, the Pico base station may simultaneously detect the load and the interference to separately calculate the number of the needed ABSs, and finally uses the relatively larger required number. For example, when two ABSs are needed by using interference detection and calculation and three ABSs are needed by using interference calculation, actually three ABSs are needed.

For another example, the Pico base station may simultaneously detect the load and the interference to separately calculate the number of the needed ABSs, and perform averaging and rounding up (or weighted averaging) to obtain an average value for the number of the needed ABSs, that is, strike a compromise between the load factor and the interference factor.

It should be noted that a manner performed by the first base station (such as a Pico base station) for combining the load factor and the interference factor is not limited to the foregoing two examples and a person skilled in the art may define the manner for combining the load factor and the interference factor according to an own requirement.

Further, in this embodiment of the present invention, the step where the first base station (such as a Pico base station) generates the almost blank subframe configuration request according to the interference in the first base station and/or the load of the first base station may further include:
when a detection result of at least one of the following detection items is yes, the quantity information of the almost blank subframes carried in the generated almost blank subframe configuration request is zero:
   detecting whether all user equipments in the first base station are in idle state;
   detecting whether all the user equipments in the first base station secede from jurisdiction of the first base station; and
   detecting whether no intra-frequency neighboring cell coverage exists in the first base station.

Specifically, that the first base station is a Pico base station and the second base station is a Macro base station is used as an example for description. The Pico base station may further detect whether all the UEs in the base station are idle (in idle state) or whether all the UEs in the Pico base station secede from jurisdiction of the Pico base station, or detect whether no intra-frequency neighboring cell coverage exists in the Pico base station; and when a detection result is yes, generate the almost blank subframe configuration request according to the preset communications protocol. The quantity information of the almost blank subframes carried in the almost blank subframe configuration request is zero, initiatively asking the Macro base station to set the number of the ABSs to "zero", that is, initiatively asking not to set the ABS.

Specifically, when it is detected whether no intra-frequency neighboring cell coverage exists in the Pico base station, it may be detected whether no neighboring cell exists in the Pico base station. When it is detected that no neighboring cell exists in the Pico base station, it indicates that the Pico base station is an isolated site and the Pico base station may initiatively ask the Macro base station not to set any ABS. When it is detected whether no intra-frequency neighboring cell coverage exists in the Pico base station, it may also be that an automatic neighbor relation ANR is used to detect whether no intra-frequency neighboring cell coverage exists in the Pico base station. Specifically, after discovering a neighboring relation, the Pico base station transfers configuration information between two neighboring cells by using an X2 interface. In this embodiment of the present invention, according to frequency information of neighboring cells in the configuration information, it may be determined whether neighboring cells have different frequencies. When it is determined that all neighboring cells have different frequencies, it is indicated that no intra-frequency neighboring cell coverage exists in the Pico base station and the Pico base station may initiatively ask the Macro base station not to set the ABS.

It should be noted that for a base station without X2 configuration (such as a Pico base station or a Macro base station), a home eNodeB (Home eNodeB) without the X2 configuration, and a femto base station (a femto base station), the frequency information of the neighboring cells need to be acquired from an air interface. For example, except that a cell global identity GCI information is reported by a UE, the frequency information of the neighboring cells further need to be reported so as to determine whether the neighboring cells have different frequencies.

In this embodiment of the present invention, when the interference and the load are taken into consideration, a factor that the base station is disabled due to power saving, a factor that leaving from the base station due to cross-cell switchover, and a factor whether intra-frequency neighboring cell coverage exists are further taken into consideration. In this way, spectrum efficiency of the system may be further improved because even the load of the base station is 0, an eICIC interference source of the base station still exists. For example, a UE may be in a gap of a best effort (best effort) service (such as http browsing) and may restore burst traffic at any time and therefore that the burst traffic is 0 traffic does not indicate that burst interference has been disappeared. However, if there is no UE, the Pico base station is disabled, or no intra-frequency neighboring cell coverage exists, it is expected that the ABS with the eICIC Macro base station exits so as to further improve the spectrum frequency of the system. Certainly, a manner for exiting the "zero" ABS configuration is correspondingly set in this embodiment of the present invention. In a contrary process, when it is detected that not all the user equipments in the base station are in idle state, it is detected that not all the user equipments in the base station secede from jurisdiction of the base station, or it is detected that the intra-frequency neighboring cell coverage exists in the base station, for example, the Pico base station serving as a destination end receives handover preparation information (Handover preparation) sent by the X2 interface or an S1 interface, the Pico base station instructs the corresponding Macro base station to restore use of the ABS configuration and passively exit the "zero" ABS configuration.

It should be noted that the first base station in this embodiment of the present invention is not limited to the Pico base station but may also be a base station with low transmit power, such as a femto base station, a micro base station (Micro base station), a Home eNodeB, and a relay (Relay), and may also be a base station with high transmit power, such as an eNodeB and a Macro base station; the second base station is not limited to the base station with high transmit power, such as a Macro base station, but may also be a Pico station and may also be a base station with low transmit power, such as a femto base station, a Micro base station, a Home eNodeB, and a Relay. This embodiment of the present invention is not limited to interference coordination on a heterogeneous Network but may also be interference coordination between macro base stations and the like. On a real LTE/LTE-A network, an actual interference scenario does not only exist between an LPN and the Macro base station. In a crowded city area, only omnidirectional antennas are used between the Macro base station and the Macro base station with 200m-300m site distance in most cases and therefore an overlap area between intra-frequency cells is relatively large.

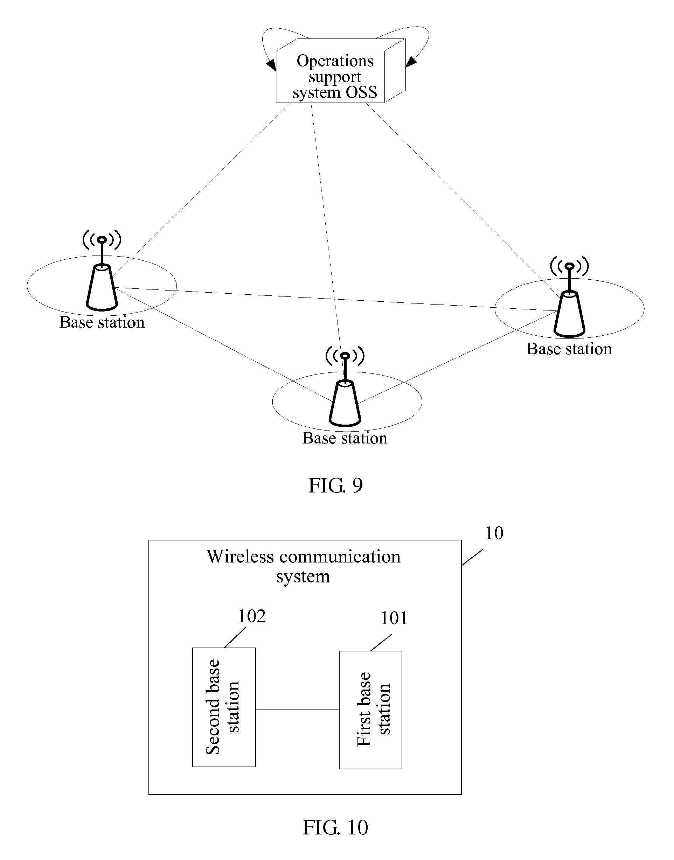

It should be also noted that in this embodiment of the present invention, ABS request and response signaling is not only transferred through the X2 interface but may also be transferred through the S1 or on the OSS through a northbound interface itf-N (shown in FIG. 9).

According to embodiments of the present invention, an almost blank subframe configuration request sent by a first base station is received, where the almost blank subframe configuration request is almost blank subframe configuration request generated by the first base station according to a running condition of the first base station; and the number of almost blank subframes is adjusted according to the almost blank subframe configuration request. This implements a mechanism for automatically and dynamically adjusting use of an ABS, solves a reliability problem brought by interference of transmission between channels in the prior art, and meanwhile improves average spectrum efficiency of a system. In this way, the own ABS is set according to current own ABS configuration and service, thereby efficiently improving average capacity and average throughput of the system. By further detecting whether all user equipments in the first base station are in idle state, detecting whether all the user equipments in the first base station secede from jurisdiction of the first base station, or detecting whether no intra-frequency neighboring cell coverage exists in the first base station, when there is no UE, the first base station is disabled at midnight so as to save power, users in a house moves largely from one area to another area, or the like, the ABS may be exited, thereby better improving the average spectrum efficiency of the system and therefore improving the average capacity and the average throughput of the system.

The foregoing describes in detail a method for dynamically adjusting a subframe in a wireless communications system in embodiments of the present invention and the following correspondingly describes in detail a base station and a wireless communications system in this embodiment of the present invention.

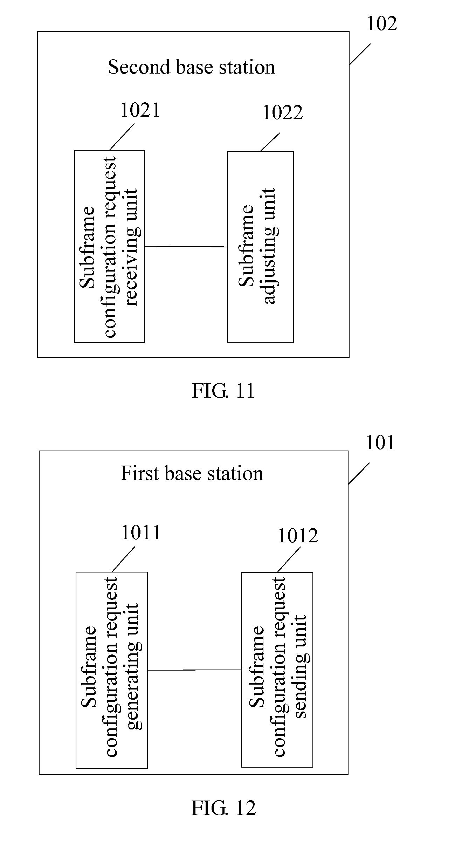

As shown in FIG. 10 which is a schematic structural diagram of a wireless communications system according to an embodiment of the present invention, a wireless communications system 10 includes a first base station 101 and a second base station 102. It should be noted that the wireless communications system may include multiple first base stations 101 and multiple second base stations 102. FIG. 10 uses one first base station 101 and one second base station 102 for description. The wireless communications system 10 further includes a carrier-class server configured by an OSS/OAM and the like (not shown in FIG. 10). Specifically, as shown in FIG. 11 which is a schematic structural diagram of a second base station according to an embodiment of the present invention, the second base station 102 includes a subframe configuration request receiving unit 1021 and a subframe adjusting unit 1022, where:
the subframe configuration request receiving unit 1021 is configured to receive an almost blank subframe configuration request sent by the first base station 101, where the almost blank subframe configuration request is almost blank subframe configuration request generated by the first base station 101 according to interference in the first base station 101 and/or a load of the first base station 101; and
the subframe adjusting unit 1022 is configured to adjust the number of almost blank subframes according to the almost blank subframe configuration request.

Specifically, the subframe adjusting unit 1022 adjusts the number of almost blank subframes according to the almost blank subframe configuration request, for example, increasing, decreasing, or retaining the number of subframes, where the almost blank subframes are subframes transmit a service with low transmission power or do not transmit a service, that is ABSs. It should be noted that the second base station 102 may further include a response returning unit that is configured to, after the subframe adjusting unit 1022 completes adjustment of the number of the almost blank subframes, return almost blank subframe configuration request response information to the first base station 101 so as to notify the first base station 101 of ongoing subframe configuration.

According to the wireless communications system 10 in this embodiment of the present invention, on a heterogeneous network, when a TDM ICIC method is used to handle inter-cell interference in a heterogeneous network scenario, automatic and dynamic adjustment of the usage of an ABS according to a running condition of a base station is implemented, thereby solving a reliability problem brought by interference of transmission between channels in the prior art and meanwhile improving average spectrum efficiency of the system. In this way, the own ABS is set according to current own ABS configuration and service, thereby efficiently improving average capacity and average throughput of the system.

Further, as shown in FIG. 12 which is a schematic structural diagram of a first base station according to a first embodiment of the present invention, a first base station 101 includes a subframe configuration request generating unit 1011 and a subframe configuration request sending unit 1012, where:
the subframe configuration request generating unit 1011 is configured to generate an almost blank subframe configuration request according to interference in the first base station 101 and/or a load of the first base station 101, where the almost blank subframe configuration request carries quantity information of almost blank subframes; and

The subframe configuration request sending unit 1012 is configured to send the almost blank subframe configuration request generated by the subframe configuration request generating unit 1011 to a second base station 102, so that the second base station 102 adjusts the number of the almost blank subframes of the second base station 102 according to the almost blank subframe configuration request.

Specifically the subframe configuration request generating unit 1011 generates the almost blank subframe configuration request according to the according to the interference in the first base station 101 and/or the load of the first base station 101 and according to a preset communications protocol. The communications protocol may be set after being negotiated between two communications parties in advance. For example, a new communications protocol is negotiated and defined in advance or a communications protocol is extended. The almost blank subframe configuration request may carry quantity information of the almost blank subframes and specifically may be that the number of the subframes requires to be increased, decreased, or remained.

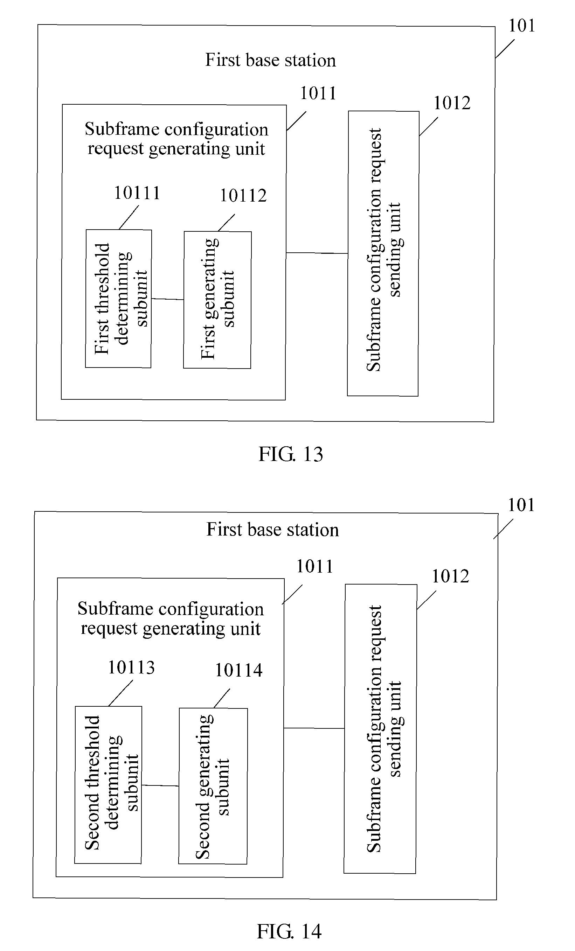

Further, as shown in FIG. 13 which is a structural diagram of Embodiment 2 of a first base station according to the present invention, a subframe configuration request generating unit 1011 in a first base station 101 may include a first threshold determining subunit 10111 and a first generating subunit 10112.

The first threshold determining subunit 10111 is configured to determine, according to at least one preset interference threshold, a maximum interference threshold that interference in the first base station 101 reaches, where the interference threshold corresponds to quantity information of almost blank subframes.

Specifically, that the first base station 101 is a Pico base station and a second base station 102 is a Macro base station is used as an example. When service traffic of a Pico UE continuously increases, a probability that the Pico base station serves as an interfered base station continuously increases. The first threshold determining unit 10111 determines, according to the at least one preset interference threshold, a maximum interference threshold that the interference in the Pico base station reaches. That is, for example, when the interference in the Pico base station increases and exceeds a threshold, the Pico base station determines that the Macro base station needs to increase the number of ABSs so as to provide the ABS for the Pico base station; or when the interference in the Pico base station decreases and is lower than a threshold, the Pico base station determines that the Macro base station needs to decrease the number of the ABSs so as to improve average spectrum efficiency.

The first generating subunit 10112 is configured to generate the almost blank subframe configuration request, where the almost blank subframe configuration request carries quantity information of almost blank subframes corresponding to the maximum interference threshold determined by the first threshold determining subunit 10111.

Specifically, the first generating subunit 10212 may generate the almost blank subframe configuration request, such as an ABS configuration mode request (such as ABS pattern change request), according to the preset communications protocol. The almost blank subframe configuration request carries the quantity information of the almost blank subframes corresponding to the determined maximum interference threshold, for example, carries increment information or difference information of the ABSs, such as +2 indicating that two ABSs are added and -2 indicating that two ABSs are removed, or carries an absolute value of the ABSs, such as 3 or 4.

It should be noted that in this embodiment of the present invention, a position of an ABS in a corresponding subframe may be set randomly or may also be set according to the almost blank subframe configuration request. Specifically, the almost blank subframe configuration request generated by the first generating subunit 10112 further carries position information of the almost blank subframes corresponding to the determined maximum interference threshold. For example, the almost blank subframe configuration request generated by the first base station 101 includes an ABS sequence, where the ABS sequence may not only instruct the second base station 102 to set the number of the ABSs in the corresponding subframes but also set positions of the ABSs in the corresponding subframes. When the ABS sequence is 0001000100, it is instructed that No. 4 and No. 8 subframes are ABSs; or when the ABS sequence is 1100110000, No. 1, 2, 5, and 6 subframes are ABSs. Certainly, a person of ordinary skill in the art may also use 0 in the ABS sequence to indicate an ABS and use 1 to indicate a non-ABS.

It should be noted that in this embodiment, the interference in the base station 101 includes any one or any combination of the following: an SINR of the base station, a CINR of the base station, a C/I ratio C/I of the base station, RSRP reported by a user equipment, and RSRQ reported by the user equipment.

For example, when the SINR is used as the interference in the Pico base station, the interfered Pico base station determines, according to at least one preset SINR threshold, a maximum SINR threshold that the SINR of the Pico base station reaches, and generates the almost blank subframe configuration request according to the preset communications protocol.

For another example, when the RSRP reported by the UE is used as the interference in the Pico base station, a UE of the interfered Pico base station reports measured RSRP of a neighboring cell and the Pico base station determines, according to at least one preset RSRP threshold, a maximum RSRP threshold that the RSRP reaches, that is equivalent to determining a degree of the interference in the Pico base station, and generates the almost blank subframe configuration request according to the preset communications protocol.

It should be noted that when the CINR, the C/I, or the RSRQ reported by the UE is used as the interference in the Pico base station, the description is similar as the foregoing description and no further details are provided herein.

Further, as shown in FIG. 14 which is a schematic structural diagram of a first base station according to a third embodiment of the present invention, a subframe configuration request generating unit 1011 in a first base station 101 may include a second threshold subunit 10113 and a second generating subunit 10114.
the second threshold determining subunit 10113 is configured to determine, according to at least one preset load threshold, a maximum load threshold that a load of the first base station 101 reaches, where the load threshold corresponds to quantity information of almost blank subframes.

Specifically, that the first base station 101 is a Pico base station and a second base station 102 is a Macro base station is used as an example. When service traffic of a Pico UE continuously increases, the load of the Pico base station continuously increases. The second threshold determining subunit 10113 determines, according to the at least one preset load threshold, a maximum load threshold that the load of the Pico base station reaches. That is, for example, when the load of the Pico base station increases and exceeds a threshold, the Pico base station determines that the Macro base station needs to increase the number of ABSs so as to provide the ABS for the Pico base station; or when the load of the Pico base station decreases and is lower than a threshold, the Pico base station determines that the Macro base station needs to decrease the number of the ABSs so as to improve average spectrum efficiency.

The second generating subunit 10114 is configured to generate the almost blank subframe configuration request, where the almost blank subframe configuration request carries quantity information of almost blank subframes corresponding to the maximum load threshold determined by the second threshold determining subunit 10113.

Specifically, the second generating subunit 10114 may generate the almost blank subframe configuration request, such as an ABS configuration mode request (such as ABS pattern change request), according to the preset communications protocol. The almost blank subframe configuration request carries the quantity information of the almost blank subframes corresponding to the determined maximum load threshold, for example, carries increment information or difference information of the ABSs, such as +2 indicating that two ABSs are added and -2 indicating that two ABSs are removed, carries an absolute value of the ABSs, such as 3 or 4, or carries an ABS sequence, such as 1100110000 indicating that No. 1, 2, 5, and 6 subframes are suggested as ABSs. Certainly, a person of ordinary skill in the art may also use 0 in the ABS sequence to indicate an ABS and use 1 to indicate a non-ABS.

It should be noted that in this embodiment of the present invention, a position of an ABS in a corresponding subframe may be set randomly or may also be set according to the almost blank subframe configuration request. Specifically, the almost blank subframe configuration request generated by the second generating subunit 10114 further carries position information of the almost blank subframes corresponding to the determined maximum interference threshold. For example, the almost blank subframe configuration request generated by the first base station 101 includes an ABS sequence, where the ABS sequence may not only instruct the second base station 102 to set the number of the ABSs in the corresponding subframes but also set positions of the ABSs in the corresponding subframes. When the ABS sequence is 0001000100, it is instructed that No. 4 and No. 8 subframes are ABSs; or when the ABS sequence is 1100110000, No. 1, 2, 5, and 6 subframes are ABSs. Certainly, a person of ordinary skill in the art may also use 0 in the ABS sequence to indicate an ABS and use 1 to indicate a non-ABS.

It should be noted that the load includes throughput(that is, the number of bits sent to all UEs within a unit time) or an occupancy rate of a physical resource block (PRB usage).

For example, when the PRB usage is used as the load of the Pico base station, that is, in a scenario where the PRB usage is used, the Pico base station determines, according to at least one preset RPB usage threshold, a maximum PRB usage threshold that the PRB usage of the Pico base station reaches, and generates the almost blank subframe configuration request according to the preset communications protocol.

For another example, when throughput of the Pico base station is used as the load of the Pico base station, the Pico base station determines, according to at least one preset throughput threshold, a maximum throughput threshold that the throughput reaches, and generates the almost blank subframe configuration request according to the preset communications protocol. For details, see the following table.

| Sequence Number | Throughput | ABS Quantity |
|---|---|---|
| 1 | 0-5 Mbps | 1 ABS |
| 2 | 5-10 Mbps | 2 ABSs |
| 3 | 10-20 Mbps | 3 ABSs |
| 4 | 20-50 Mbps | 4 ABSs |
| 5 | 50-100 Mbps | 5 ABSs |

The Pico base station presets five throughput thresholds: 0 Mbps, 5 Mbps, 10 Mbps, 20 Mbps, and 50 Mbps. Each threshold may be set with corresponding quantity information of the almost blank subframes: 1 ABS, 2 ABSs, 3 ABSs, 4 ABSs, and 5 ABSs. Then, for example, when the Pico base station detects that a current throughput is 12 Mbps and the Pico base station determines that the maximum throughput threshold that the throughput reaches is 10 Mbps, the Pico base station generates the almost blank subframe configuration request according to the preset communications protocol, where the almost blank subframe configuration request carries information requiring three ABSs; for another example, when the Pico base station detects that the current throughput is 23 Mbps subsequently and the Pico base station determines that the maximum throughput threshold that the throughput reaches is 20 Mbps, the Pico base station generates the almost blank subframe configuration request according to the preset communications protocol, where the almost blank subframe configuration request carries information requiring four ABSs, that is information that asks one ABS to be added compared with a previous setting.

It should be noted that the number of the ABS requests may be configured by an operations support system OSS or may also be set by an evolved NodeB eNB manufacturer. The present invention is not limited to a parameter setting limited in the foregoing table and a person skilled in the art may flexibly set the parameters according to actual conditions.

It should be noted that the subframe configuration request generating unit 1011 in the first base station 101 may further include the first threshold determining subunit 10111, a first generating subunit 10112, a second threshold determining subunit 10113, and a second generating subunit 10114. That is, the first base station 101 (such as a Pico base station) in this embodiment of the present invention may generate the almost blank subframe configuration request according to the interference in the first base station 101 and the load of the first base station 101 and according to the preset communications protocol, where the almost blank subframe configuration request carries the quantity information of the almost blank subframes. Specifically:
the Pico base station may combine a load factor and an interference factor so as to set the number of the needed ABSs. For example, the Pico base station may simultaneously detect the load and the interference to separately calculate the number of the needed ABSs, and finally uses the relatively larger required number. For example, when two ABSs are needed by using interference detection and calculation and three ABSs are needed by using interference calculation, actually three ABSs are needed.

For another example, the Pico base station may simultaneously detect the load and the interference to separately calculate the number of the needed ABSs, and perform averaging and rounding up (or weighted averaging) to obtain an average value for the number of the needed ABSs, that is, strike a compromise between the load factor and the interference factor.

It should be noted that a manner performed by the first base station 101 (such as a Pico base station) for combining the load factor and the interference factor is not limited to the foregoing examples and a person skilled in the art may define the manner for combining the load factor and the interference factor according to an own requirement; the first generating subunit 10112 and the second generating subunit 10114 may be two independent physical units or may be a same physical unit.

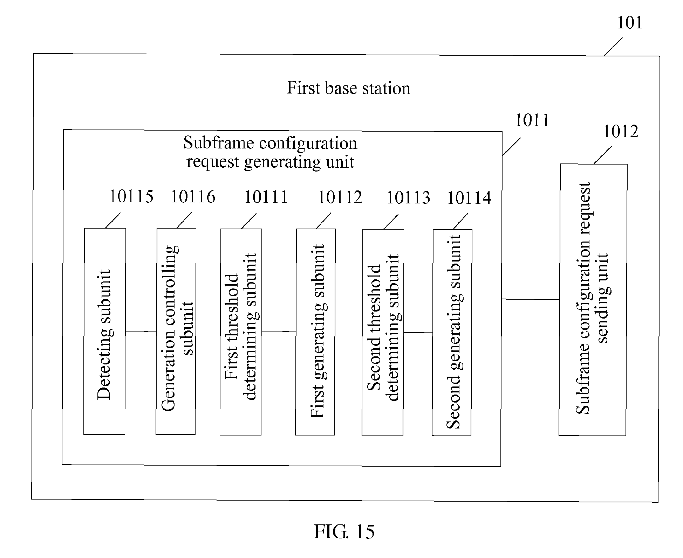

Further, as shown in FIG. 15 which is a schematic structural diagram of a first base station according to a fourth embodiment of the present invention, the subframe configuration request generating 1011 in the first base station 101 may further include, except the first threshold determining subunit 10111, a first generating subunit 10112, a second threshold determining subunit 10113, and the second generating subunit 10114, a detecting subunit 10115 and a generating controlling subunit 10116, where:
the detecting subunit 10115 is configured to detect whether all user equipments in the first base station 101 are in idle state, detect whether all the user equipments in the first base station 101 secede from jurisdiction of the first base station 101, or detect whether no intra-frequency neighboring cell coverage exists in the first base station 101; and
the generation controlling subunit 10116 is configured to, when a detection result of at least one of the detection items detected by the detecting subunit 10115 is yes, control the quantity information of the almost blank subframes carried in the generated almost blank subframe configuration request to be zero.

Specifically, that the first base station 101 is a Pico base station and the second base station 102 is a Macro base station is used as an example for description. The detecting subunit 10115 in the Pico base station may further detect whether the UEs in the base station are all idle (in idle state) or whether the UEs in the Pico base station secede from jurisdiction of the Pico base station, or detect whether no intra-frequency neighboring cell coverage exists in the Pico base station; and when one detection result is yes, the subframe configuration request generating unit 1011 performs control by using the generation controlling subunit 10116 and generates the almost blank subframe configuration request according to the preset communications protocol. The quantity information of the almost blank subframes carried in the almost blank subframe configuration request is zero, initiatively asking the Macro base station to set the number of the ABSs to "zero", that is, initiatively asking not to set the ABS.

Specifically, when detecting whether no intra-frequency neighboring cell coverage exists in the Pico base station, the detecting subunit 10115 may detect whether no neighboring cell exists in the Pico base station. When it is detected that no neighboring cell exists in the Pico base station, it indicates that the Pico base station is an isolated site and the Pico base station may initiatively ask the Macro base station not to set any ABS. When detecting whether no intra-frequency neighboring cell coverage exists in the Pico base station, the detecting subunit 10115 may also use an automatic neighbor relation ANR to detect whether no intra-frequency neighboring cell coverage exists in the Pico base station. Specifically, after discovering a neighboring relation, the Pico base station transfers configuration information between two neighboring cells by using an X2 interface. In this embodiment of the present invention, according to frequency information of neighboring cells in the configuration information, it may be determined whether neighboring cells have different frequencies. When it is determined that all neighboring cells have different frequencies, it is indicated that no intra-frequency neighboring cell coverage exists in the Pico base station and the Pico base station may initiatively ask the Macro base station not to set the ABS.

It should be noted that for a base station without X2 configuration (such as a Pico base station or a Macro base station), a home eNodeB without the X2 configuration, and a femto base station, the frequency information of the neighboring cells need to be acquired from an air interface. For example, except that a cell global identity GCI information is reported by a UE, the frequency information of the neighboring cells further need to be reported so as to determine whether the neighboring cells have different frequencies.

In this embodiment of the present invention, when the interference and the load are taken into consideration, a factor that the base station is disabled due to power saving, a factor that leaving from the base station due to cross-cell switchover, and a factor whether intra-frequency neighboring cell coverage exists are further taken into consideration. In this way, spectrum efficiency of the system may be further improved because even the load of the base station is 0, an eICIC interference source of the base station still exists. For example, a UE may be in a gap of a best effort service (such as http browsing) and may restore burst traffic at any time and therefore that the burst traffic is 0 traffic does not indicate that burst interference has been disappeared. However, if there is no UE, the Pico base station is disabled, or no intra-frequency neighboring cell coverage exists, it is expected that the ABS with the eICIC Macro base station exits so as to further improve the spectrum frequency of the system. Certainly, a manner for exiting the "zero" ABS configuration is correspondingly set in this embodiment of the present invention. In a contrary process, when it is detected that not all the user equipments in the base station are in idle state, it is detected that not all the user equipments in the base station secede from jurisdiction of the base station, or it is detected that the intra-frequency neighboring cell coverage exists in the base station, for example, the Pico base station serving as a destination end receives handover preparation information sent by the X2 interface or an S1 interface, the Pico base station instructs the corresponding Macro base station to restore use of the ABS configuration and passively exit the "zero" ABS configuration.

It should be noted that the first base station 101 in this embodiment of the present invention is not limited to the Pico base station but may also be a base station with low transmit power, such as a femto base station, a Micro base station, a Home eNodeB, and a relay, and may also be a base station with high transmit power, such as an eNodeB and a Macro base station; the second base station 102 is not limited to the base station with high transmit power, such as a Macro base station, but may also be a Pico station and may also be a base station with low transmit power, such as a femto base station, a Micro base station, a Home eNodeB, and a Relay. This embodiment of the present invention is not limited to interference coordination on a heterogeneous Network but may also be interference coordination between macro base stations and the like. On a real LTE/LTE-A network, an actual interference scenario does not only exist between an LPN and the Macro base station. In a crowded city area, only omnidirectional antennas are used between the Macro base station and the Macro base station with 200m-300m site distance in most cases and therefore an overlap area between intra-frequency cells is relatively large.

It should be also noted that in this embodiment of the present invention, ABS request and response signaling between the first base station 101 and the second base station 102 in the wireless communications system 10 is not only transferred through the X2 interface but may also be transferred through the S1 or on the OSS through a northbound interface itf-N (as shown in FIG. 9).

To sum up, according to embodiments of the present invention, an almost blank subframe configuration request sent by a first base station is received, where the almost blank subframe configuration request is almost blank subframe configuration request generated by the first base station according to a running condition of the first base station; and the number of almost blank subframes is adjusted according to the almost blank subframe configuration request. This implements a mechanism for automatically and dynamically adjusting use of an ABS, solves a reliability problem brought by interference of transmission between channels in the prior art, and meanwhile improves average spectrum efficiency of a system. In this way, the own ABS is set according to current own ABS configuration and service, thereby efficiently improving average capacity and average throughput of the system. By further detecting whether all user equipments in the first base station are in idle state, detecting whether all the user equipments in the first base station secede from jurisdiction of the first base station, or detecting whether no intra-frequency neighboring cell coverage exists in the first base station, when there is no UE, the first base station is disabled at midnight so as to save power, users in a house moves largely from one area to another area, or the like, the ABS may be exited, thereby better improving the average spectrum efficiency of the system and therefore improving the average capacity and the average throughput of the system.

A person of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disc, a read-only memory (Read-Only Memory, ROM), or a random access memory (Random Access Memory, RAM).

The foregoing disclosed descriptions are merely one type of exemplary embodiments of the present invention. However, the protection scope of the present invention is not limited thereto. Therefore, equivalent variations made according to the claims of the present invention shall fall within the protection scope of the present invention.

## Claims

1. A method for dynamically adjusting a subframe in a wireless communications system, comprising:
generating, by a first base station, an almost blank subframe configuration request according to interference in the first base station and/or a load of the first base station, wherein the almost blank subframe configuration request carries quantity information of almost blank subframes; and
sending, by the first base station, the almost blank subframe configuration request to a second base station so that the second base station adjusts the number of almost blank subframes of the second base station according to the almost blank subframe configuration request.

2. The method according to claim 1, wherein the generating, by a first base station, an almost blank subframe configuration request according to interference in the first base station and/or a load of the first base station comprises:
determining, by the first base station, according to at least one preset interference threshold, a maximum interference threshold that the interference in the first base station reaches; and
generating, by the first base station, the almost blank subframe configuration request, wherein the almost blank subframe configuration request carries the quantity information of the almost blank subframes corresponding to the maximum interference threshold.

3. The base station according to claim 2, wherein the almost blank subframe configuration request further carries position information of the almost blank subframes corresponding to the determined maximum interference threshold.

4. The method according to claim 2, wherein the interference in the first base station includes any one or any combination of the following:
a signal to interference plus noise ratio of the first base station;
a carrier to interference plus noise ratio of the first base station;
a carrier/interference ratio of the first base station;
reference signal reception power reported by a user equipment; and
reference signal reception quality reported by the user equipment.

5. The method according to claim 1, wherein the generating, by a first base station, an almost blank subframe configuration request according to interference in the first base station and/or a load of the first base station comprises:
determining, by the first base station, according to at least one preset load threshold, a maximum load threshold that the load of the first base station reaches; and
generating, by the first base station, the almost blank subframe configuration request, wherein the almost blank subframe configuration request carries the quantity information of the almost blank subframes corresponding to the maximum load threshold.

6. The base station according to claim 5, wherein the almost blank subframe configuration request further carries position information of the almost blank subframes corresponding to the determined maximum load threshold.

7. The method according to claim 5, wherein the load includes throughput or an occupancy rate of a physical resource block.

8. The method according to any one of claims 1-7, wherein the generating, by a first base station, an almost blank subframe configuration request according to interference in the first base station and/or a load of the first base station further comprises:
when a detection result of at least one of the following detection items is yes, the quantity information of the almost blank subframes carried in the generated almost blank subframe configuration request is zero:
detecting whether all user equipments in the first base station are in idle state;
detecting whether all the user equipments in the first base station secede from jurisdiction of the first base station; and
detecting whether intra-frequency neighboring cell coverage does not exist in the first base station.

9. A method for dynamically adjusting a subframe in a wireless communications system, comprising:
receiving, by a second base station, an almost blank subframe configuration request sent by a first base station, wherein the almost blank subframe configuration request is almost blank subframe configuration request generated by the first base station according to interference in the first base station and/or a load of the first base station, and the almost blank subframe configuration request carries quantity information of almost blank subframes; and
adjusting, by the second base station, the number of almost blank subframes of the second base station according to the almost blank subframe configuration request.

10. A base station, comprising:
a subframe configuration request receiving unit, configured to receive an almost blank subframe configuration request sent by a first base station, wherein the almost blank subframe configuration request is an almost blank subframe configuration request generated by the first base station according to interference in the first base station and/or a load of the first base station, and the almost blank subframe configuration request carries quantity information of almost blank subframes; and
a subframe adjusting unit, configured to adjust the number of almost blank subframes according to the almost blank subframe configuration request.

11. A base station, comprising:
a subframe configuration request generating unit, configured to generate an almost blank subframe configuration request according to interference in the base station and/or a load of the base station, wherein the almost blank subframe configuration request carries quantity information of almost blank subframes; and
a subframe configuration request sending unit, configured to send the almost blank subframe configuration request generated by the subframe configuration request generating unit to a second base station, so that the second base station adjusts the number of almost blank subframes of the second base station according to the almost blank subframe configuration request.

12. The base station according to claim 11, wherein the subframe configuration request generating unit comprises:
a first threshold determining unit, configured to determine, according to at least one preset interference threshold, a maximum interference threshold that the interference in the base station reaches; and
a first generating subunit, configured to generate the almost blank subframe configuration request, wherein the almost blank subframe configuration request carries the quantity information of the almost blank subframes corresponding to the maximum interference threshold determined by the first threshold determining subunit.

13. The base station according to claim 11, wherein the almost blank subframe configuration request generated by the first generating subunit further carries position information of the almost blank subframes corresponding to the determined maximum interference threshold.

14. The base station according to claim 11, wherein the subframe configuration request generating unit comprises:
a second threshold determining unit, configured to determine, according to at least one preset load threshold, a maximum load threshold that the load of the base station reaches; and
a second generating subunit, configured to generate the almost blank subframe configuration request, wherein the almost blank subframe configuration request carries the quantity information of the almost blank subframes corresponding to the maximum load threshold determined by the second threshold determining subunit.

15. The base station according to claim 14, wherein the almost blank subframe configuration request generated by the second generating subunit further carries position information of the almost blank subframes corresponding to the determined maximum load threshold.

16. The base station according to any one of claims 11-15, wherein the subframe configuration request generating unit further comprises:
a detecting subunit, configured to detect whether all user equipments in the base station are in idle state; detect whether all the user equipments in the base station secede from jurisdiction of the base station; or detect whether no intra-frequency neighboring cell coverage exists in the base station; and
a generation controlling subunit, configured to, when a detection result of at least one of the detection items detected by the detecting subunit is yes, control the quantity information of the almost blank subframes carried in the generated almost blank subframe configuration request to be zero.

17. A wireless communications system, including a first base station and a second base station, wherein the first base station is the base station described in claim 9 and the second base station is the base station described in any one of claims 11-16.
